# EUROPEAN PATENT APPLICATION

(11) **EP 3 012 023 A2**
(43) Date of publication of application: **27.04.2016**
(21) Application number: 15175073.4
(22) Date of filing: 02.07.2015
(51) Int. Cl.: B01J 37/04, B01J 35/00, B01J 21/04, B01J 21/06, B01J 21/08, B01J 23/42, B01J 23/44, B01J 23/52, B01J 37/02, B05B 3/00

(54) **CATALYST STRUCTURE, CATALYST STRUCTURE MANUFACTURING METHOD AND CATALYST STRUCTURE MANUFACTURING APPARATUS**

(30) Priority: 08.09.2014 JP 2014182367
(71) Applicant: SCREEN Holdings Co., Ltd., Kyoto 602-8585 (JP)
(72) Inventor: Sanada, Masakazu, KYOTO-SHI, Kyoto 602-8585 (JP)
(74) Representative: Kilian Kilian & Partner

(57) **Abstract**

a catalyst layer in which a plurality of supported catalysts each including a particulate catalyst support and catalyst particles having a smaller diameter than the catalyst support and supported in a dispersed manner on a surface of the catalyst support are bound by a binder is provided. Thereby a specific surface area can be drastically improved and a catalyst function can be enhanced.

## Description

### BACKGROUND OF THE INVENTION

### 1. Field of the Invention

The invention relates to a catalyst structure including a catalyst layer and a manufacturing technology thereof.

### 2. Description of the Related Art

In the chemical industry, various catalysts are used to accelerate a reaction rate of a specific chemical reaction. For example, in JP2005-66463A, a plurality of active sites are formed by preparing sol-like or paste-like discharge liquids containing active species (catalyst particles) of a plurality of catalysts different from each other and discharging each discharge liquid to a surface of a glass substrate or a metal substrate from an ink jet nozzle in sequence to laminate the active species.

### SUMMARY OF THE INVENTION

In a catalyst used in the chemical industry, catalyst particles such as metal like gold or platinum, alloy, metal oxide, metal hydroxide or the like are supported on a catalyst support. This catalyst support is not actively involved in a catalyst reaction, but interfaces between the catalyst support and the catalyst particles function as reaction sites or active sites of the catalyst reaction. Thus, a technology to improve a specific surface area (= surface area per unit mass or surface area per unit volume) is desired to enhance a catalyst function.

However, in the above invention described in JP2005-66463A, the glass substrate or the metal substrate functions as the catalyst support and a catalyst structure is configured by supporting the active species (catalyst particles) on the surface of the catalyst support. Thus, there has been a certain limit to the improvement of the specific surface area in the invention described in JP2005-66463A.

The invention was developed in view of the above problem and aims to provide a catalyst structure having an excellent catalyst function and a technology to manufacture the catalyst structure.

According to a first aspect of the invention is a catalyst structure, and comprises a catalyst layer in which a plurality of supported catalysts each including a particulate catalyst support and catalyst particles having a smaller diameter than the catalyst support and supported in a dispersed manner on a surface of the catalyst support are bound by a binder.

According to a second aspect of the invention is a catalyst structure manufacturing method to manufacture a catalyst structure including a catalyst layer, and comprises: a preparation step of preparing a fluid material by mixing supported catalyst including a particulate catalyst support and catalyst particles having a smaller diameter than the catalyst support and supported in a dispersed manner on a surface of the catalyst support, a binder and a liquid containing water or a solvent; and a catalyst layer formation step of forming the catalyst layer by the fluid material.

According to a third aspect of the invention is a catalyst structure manufacturing apparatus to manufacture a catalyst structure including a catalyst layer, and comprises: a discharge nozzle part to discharge a fluid material that is includes a supported catalyst including a particulate catalyst support and catalyst particles having a smaller diameter than the catalyst support and supported in a dispersed manner on a surface of the catalyst support, a binder, a liquid containing water or a solvent; and a moving mechanism to relatively move a base material or a manufacturing jig with respect to the discharge nozzle part; wherein the fluid material is discharged from the discharge nozzle part toward a principal surface of the base material or a flat surface of the manufacturing jig while the base material or the manufacturing jig is relatively moved with respect to the discharge nozzle part by the moving mechanism so that the fluid material is applied onto the principal surface of the base material or the flat surface of the manufacturing jig.

According to the catalyst structure, the catalyst structure manufacturing method and apparatus according to the invention, the catalyst layer as a constituent element of the catalyst structure is formed by binding the plurality of supported catalysts each including the particulate catalyst support and the catalyst particles having a smaller diameter than the catalyst support and supported in a dispersed manner on the surface of the catalyst support by the binder. Thus, a specific surface area can be drastically improved and a catalyst function can be enhanced as compared with the catalyst structure described in JP2005-66463A, i.e. a catalyst structure in which a fine domain (area formed by catalyst particles) is formed on a catalyst support (substrate) having a shape substantially equal to a final shape of the catalyst structure.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### BRIEF DESCRIPTION OF THE DRAWINGS

FIG. 1 is a view showing an example of a catalyst structure manufacturing apparatus suitable for manufacturing a first embodiment of a catalyst structure according to the invention.
FIG. 2 is an enlarged view showing the configuration of the head part in more detail.
FIG. 3 is a view schematically showing a state of discharged of the fluid material from the head part.
FIGS. 4A and 4B are views showing the first embodiment of the catalyst structure according to the invention.
FIG. 5 is a flow chart showing the method to manufacture the first embodiment of the catalyst structure according to the invention.
FIG. 6 is a view showing an example of a catalyst structure manufacturing apparatus suitable for manufacturing the second embodiment of the catalyst structure according to the invention.
FIG. 7 is a view schematically showing an inner configuration of a third embodiment of a catalyst structure according to the invention.
FIG. 8 is a view showing an example of a catalyst structure manufacturing apparatus suitable for manufacturing the fourth embodiment of the catalyst structure according to the invention.
FIGS. 9A and 9B are enlarged views particularly showing the configuration of the head part.
FIG. 10 is a view schematically showing a state of discharge of the fluid material from the head part.
FIG. 11 is a view showing a forth embodiment of a catalyst structure according to the invention.
FIGS. 12A and 12B are views showing a method to manufacture a fifth embodiment of a catalyst structure according to the invention.
FIG. 13 is a view showing another embodiment of a catalyst structure according to the invention.

### DETAILED DESCRIPTION OF THE PREFERRED EMBODIMENTS

### <First Embodiment>

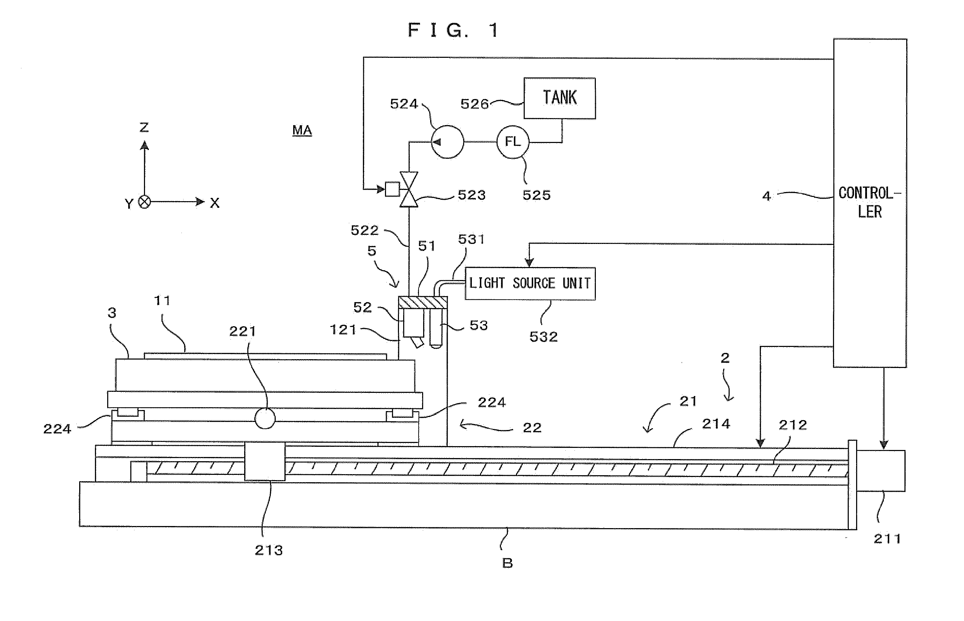

FIG. 1 is a view showing an example of a catalyst structure manufacturing apparatus suitable for manufacturing a first embodiment of a catalyst structure according to the invention. This catalyst structure manufacturing apparatus (hereinafter, merely referred to as a "manufacturing apparatus") MA is an apparatus to manufacture a catalyst structure in which a catalyst layer having a plurality of rod shaped catalyst parts is formed on a base material 11 in the form of a flat plate. This apparatus MA can be suitably used, for example, to form industrial catalysts used in the industrial chemistry.

In this manufacturing apparatus MA, a stage moving mechanism 2 is provided on a base B and a stage 3 to hold the base material 11 is movable in an X-Y plane shown in FIG. 1 by the stage moving mechanism 2. A frame 121 is so fixed to the base B as to straddle the stage 3 and a head part 5 is attached to the frame 121.

The stage moving mechanism 2 includes an X-direction moving mechanism 21 to move the stage 3 in an X direction and a Y-direction moving mechanism 22 to move the stage 3 in a Y direction from the bottom. The X-direction moving mechanism 21 is structured such that a ball screw 212 is connected to a motor 211 and a nut 213 fixed to the Y-direction moving mechanism 22 is engaged with the ball screw 212. A guide rail 214 is fixed above the ball screw 212. When the motor 211 rotates, the Y-direction moving mechanism 22 smoothly moves in the X direction along the guide rail 214 together with the nut 213.

The Y-direction moving mechanism 22 also includes a motor 221, a ball screw mechanism (not shown in the figure) and a guide rail 224. When the motor 221 rotates, the stage 3 is moved in the Y direction along the guide rail 224 by the ball screw mechanism. By the above configuration, a relative moving direction of the head part 5 with respect to the base material 11 is made changeable. Each motor of the stage moving mechanism 2 is controlled by a controller 4 to control the entire apparatus.

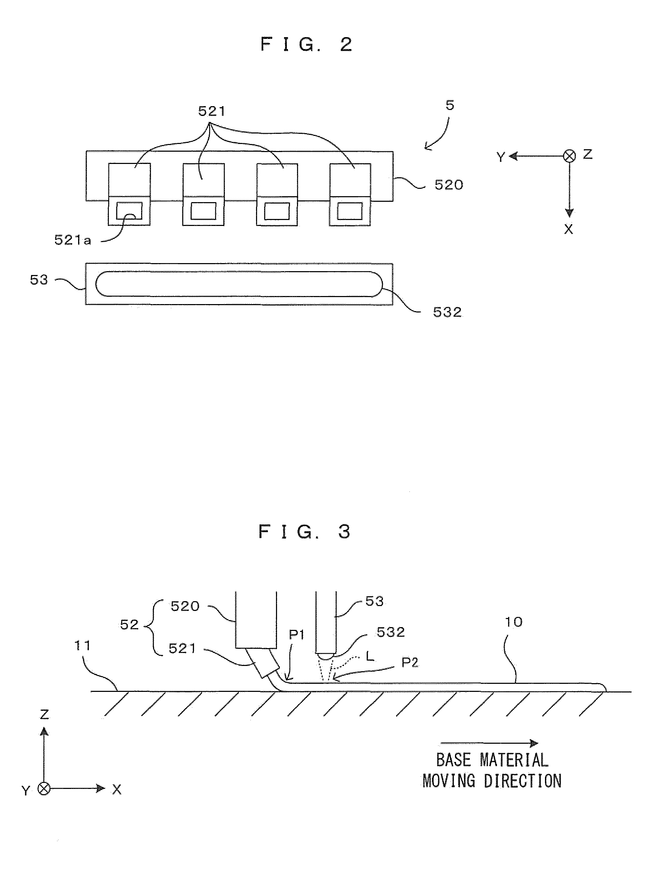

In the head part 5, a discharge nozzle part 52 to discharge a fluid material (sign 10 in FIG. 3) prepared in advance and a light irradiation part 53 to irradiate UV rays (ultraviolet rays) toward the base material 11 are provided on the lower surface of a base 51. Further, a supply pipe 522 is attached to the discharge nozzle part 52. The supply pipe 522 is connected to a tank 526 to store the fluid material containing supported catalysts via a control valve 523, a pump 524 and a flowmeter 525. The controller 4 drives the pump 524 and controls the opening and closing of the control valve 523, whereby the discharge of the fluid material from the discharge nozzle part 52 is controlled to be on and off.

The light irradiation part 53 is connected to a light source unit 532 to generate ultraviolet rays via an optical fiber 531. Although not shown in the figure, the light source unit 532 includes a shutter openable and closable on a light emitting part thereof, and emitted light can be on-off controlled and the light quantity thereof can be controlled by the opening/closing and an aperture of the shutter. The light source unit 532 is controlled by the controller 4.

FIG. 2 is an enlarged view showing the configuration of the head part in more detail and a view showing the vicinity of the tip of the discharge nozzle part 52 when the head part 5 is viewed from below. The discharge nozzle part 52 is structured such that a plurality of (four in this example, but not limited to) tubular tip nozzles 521 each including a discharge port 521a project at equal intervals in the Y direction from a nozzle base 520 having a tubular hollow interior. Each discharge port 521a communicates with the hollow interior. The fluid material conveyed from the tank 526 by way of the supply pipe 522 is discharged toward the base material 11 from the discharge ports 521a on the lower ends of the tip nozzles 521. As shown in FIGS. 1 and 2, the tip nozzles 521 extend in a (-Z) direction and a (+X) direction from the nozzle base 520.

Further, the light irradiation part 53 has substantially the same dimension as the nozzle base 520 in the Y direction to irradiate light to the entire fluid material discharged from the plurality of discharge ports 521 a, and the lower end thereof serves as a lens 532 to condense the light.

A material of the tip nozzles 521 is not particularly limited. For example, silicon or zirconia crystals can be used in that contaminants are not mixed with the fluid material discharged from the discharge ports 521a and fine processing is possible. Any of the plurality of tip nozzles 521 provided in the head part 5 has the same shape. By setting the shapes of all such tip nozzles requiring a fine processing identical, processing cost of the tip nozzles and, consequently, cost of the entire apparatus can be reduced. Further, if the plurality of tip nozzles each including one discharge port and having the same shape is detachably attached to the nozzle base, it suffices to exchange only the troubled tip nozzle, for example, when any of the discharge ports is clogged or damaged by the fluid material. Thus, the above arrangement is advantageous also in running cost of the apparatus as compared with the case where the entire discharge nozzle part is exchanged.

FIG. 3 is a view schematically showing a state of discharge of the fluid material from the head part. As described later, in this embodiment, the fluid material 10 is discharged from the discharge ports 521a of the tip nozzles 521 while the base material 11 placed on the stage 3 is moved in the X direction by the stage moving mechanism 2. Thus, the fluid material 10 discharged to the base material 11 moves in the X direction (to the right in FIG. 3) together with the base material 11 from a liquid landing position P1 where the fluid material 10 first comes into contact with the base material 11. In terms of a scanning movement relative to the base material 11, it is equivalent to fix the base material 11 and move the head part 5. However, it is preferable to fix the head part 5 and move the base material 11 in view of various pipes connected to the head part 5 and suppression of a variation of a discharge amount due to the vibration of the nozzles.

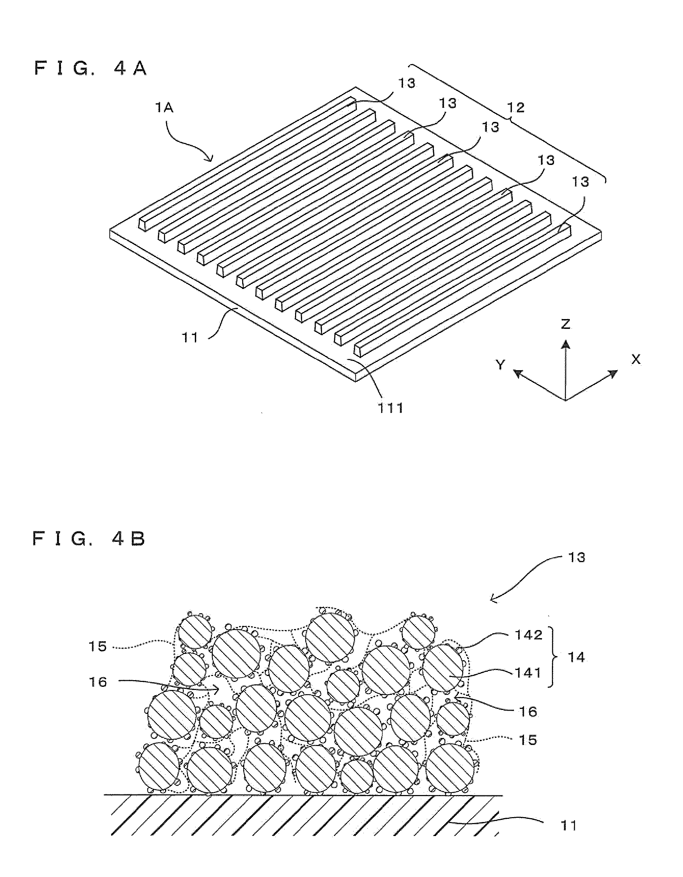

The light irradiation part 53 is provided downstream of the discharge nozzle part 52 in a base material moving direction X, and irradiates light L (e.g. ultraviolet rays) to the fluid material 10 applied to the base material 11. In the first embodiment, a photo-curable binder resin is contained as a "binder" of the invention as described later. Thus, at a light irradiation position P2 where the light L is irradiated onto the base material 11, the curing of the fluid material 10 on the base material 11 starts upon receiving light irradiation from the light irradiation part 53. In this way, this apparatus MA can form a rod shaped catalyst part (sign 13 in FIG. 4A) on the base material 11 and maintain the shape thereof.

FIGS. 4A and 4B are views showing an example of a catalyst structure manufactured by the manufacturing apparatus shown in FIG. 1 and showing the first embodiment of the catalyst structure according to the invention. This catalyst structure 1A comprises the base material 11 and a catalyst layer 12 formed on an upper surface (one principal surface) 111 of the base material 11. A material constituting the base material 11 is not particularly limited and a metal material, a glass material, a ceramic material, a resin material or the like can be used. In the case of manufacturing the catalyst structure 1A by the manufacturing apparatus MA shown in FIG. 1, the plate shaped base material 11 is used.

Further, the catalyst layer 12 formed by the manufacturing apparatus MA shown in FIG. 1 comprises a plurality of catalyst parts 13 as shown in FIG. 4A. Each catalyst part 13 has a rod or line shape extending in the X direction and these plurality of catalyst parts 13 are provided in parallel while being separated from each other in a regular interval in the Y direction, i.e. provided in stripes. Thus, areas of the upper surface 111 of the base material 11 where the catalyst parts 13 are not formed are exposed areas. Further, each catalyst part 13 exerts a catalyst function by containing supported catalysts 14 each including a catalyst support 141 and catalyst particles 142 having a smaller diameter than the catalyst support 141 and supported on a surface of the catalyst support 141.

Note that, in this embodiment, silica (SiO₂), alumina (Al₂O₃), titanium oxide (TiO₂) or the like in a powder state having a particle diameter of 1 to 100 [µm] is used as the catalyst supports 141 to form the catalyst part 13 using an application technology using the discharge nozzle part 52 to be described in detail next. Further, to exert the catalyst function by the supported catalysts 14, particles of a single element such as gold (Au), platinum (Pt) or palladium (Pd), an oxide or hydroxide thereof having a smaller diameter than the catalyst supports 141 are used as the catalyst particles 142 in this embodiment.

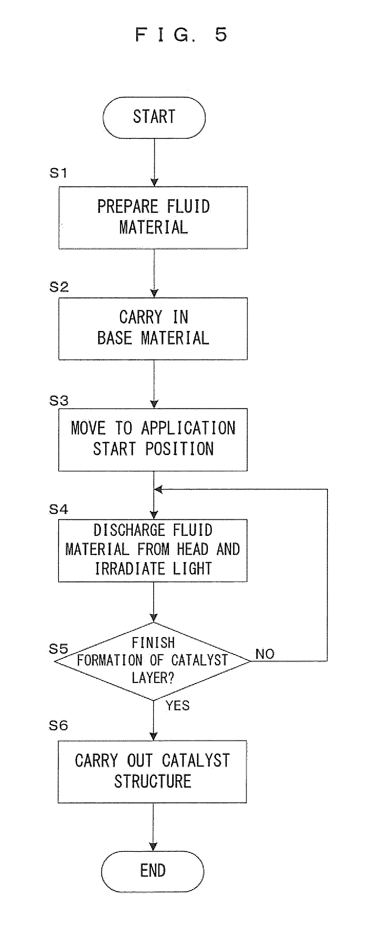

Next, a method to manufacture the above catalyst structure 1A by the aforementioned manufacturing apparatus MA is described with reference to FIGS. 4A, 4B and 5.

FIG. 5 is a flow chart showing the method to manufacture the first embodiment of the catalyst structure according to the invention. In this first embodiment, the paste-like fluid material 10 is prepared by mixing the supported catalysts 14, a photo-curable binder resin, and a liquid component such as water or an organic solvent (Step S1) and this fluid material 10 is stored in the tank 526. The fluid material 10 is a non-Newtonian fluid and desirably has a viscosity of 100 to 1000 [Pascal second] at a shearing speed of 1 [s⁻¹] in consideration of shape maintenance after discharge to the base material 11.

Then, the base material 11 is carried into the apparatus MA in which a preparation for manufacturing the catalyst structure 1A is completed as described above, and placed on the stage 3 (Step S2). Then, the stage moving mechanism 2 is operated to move the base material 11 to a predetermined application start position (position of the base material 11 in FIG. 1) so that the right end of the base material 11 is located at a position right below and near the head part 5 (Step S3).

Subsequently, the discharge of the fluid material and light irradiation from the discharge nozzle part 52 and the light irradiation part 53 provided in the head part 52 are respectively started while the base material 11 is moved in the X direction (Step S4). The fluid material 10 is continuously discharged into rod shape from the tip nozzles 521, whereby the fluid material 10 is applied in a plurality of (four in this embodiment) rods (e.g. having a cross-sectional shape with a width of 70 [µm] in the Y direction and a height of 150 [µm] in the Z direction and extending in the X direction) parallel to each other on the base material 11 and the catalyst parts 13 extend in the X direction. Further, by irradiating ultraviolet rays from the light irradiation part 53 provided downstream of the discharge nozzle part 52 in the base material moving direction X, the catalyst parts 13 are cured and a convex shape is maintained in a YZ plane. Furthermore, inside the catalyst part 13, the supported catalysts 14 are bound to each other by the binder resin 15 as shown schematically in FIG. 4B and many voids 16 are formed by the evaporation of a part of the liquid component during the discharge of the fluid material and light irradiation and the total volume of the voids 16 reaches about 10 to 30 [%] of the volume of the catalyst part 13. Note that although a step of evaporating a part of the liquid component in this way corresponds to an example of an "evaporation step" of the invention, the quantity of the voids 16 may be increased by heating the catalyst part 13 before or after light irradiation and promoting the evaporation of the liquid component.

When the application of the fluid material 10 from one end to the other end of the base material 11 (application step) and light irradiation are finished, a return to the application start position is made and the above operation is repeatedly performed a necessary number of times (Step S5) until the formation of the catalyst parts 13 on the entire surface of the base material 11 is finished. At this time, the rod shaped catalyst parts 13 can be formed on the entire upper surface 111 of the base material 11 as shown in FIG. 4A by moving the position of the base material 11 a predetermined distance in the Y direction every time one operation is finished. When the catalyst layer 12 including the plurality of rod shaped catalyst parts 13 is formed on the upper surface of the base material 11 to manufacture the catalyst structure 1A in this way, this catalyst structure 1A is carried out of the apparatus MA (Step S6). Then, the thus manufactured catalyst structure 1A is accommodated in a reaction container of one of various apparatuses. For example, the catalyst structure 1A is accommodated as a reforming catalyst in a reforming apparatus to produce reformed gas.

As described above, in this embodiment, the fluid material 10 prepared by mixing the supported catalysts 14, the photo-curable binder resin (binder) and the liquid component such as water or an organic solvent is applied into rod shape on the upper surface 111 of the base material 11 to form the catalyst layer 12 including of the plurality of catalyst parts 13. In the catalyst layer 12 of the catalyst structure 1A formed in this way, a plurality of supported catalysts 14 each including the particulate catalyst support 141 and the catalyst particles 142 having a smaller diameter than the catalyst support 141 and supported in a dispersed manner on the surface of the catalyst support 141 as shown in FIG. 4B are bound by the binder resin 15 and a specific surface area can be drastically improved as compared with a catalyst structure manufactured by the manufacturing method described in JP2005-66463A. Further, since the voids 16 are formed in each catalyst part 13 by evaporating the liquid component in the fluid material 10 after the application of the fluid material 10 in this embodiment, the specific surface area can be further improved. As a result, an excellent catalyst function is obtained.

Further, the specific surface area is improved not only inside the catalyst layer 12, but also outside the catalyst layer 12. That is, each catalyst part 13 has a self-standing three-dimensional shape on the upper surface 111 of the base material 11 as shown in FIG. 4A and a catalyst reaction is exerted not only on the ceiling surface of the catalyst part 13, but also on side surfaces. By forming the catalyst layer 12 by the rod shaped catalyst parts 13 in this way, the specific surface area can be even more improved and the catalyst function can be further enhanced.

### <Second Embodiment>

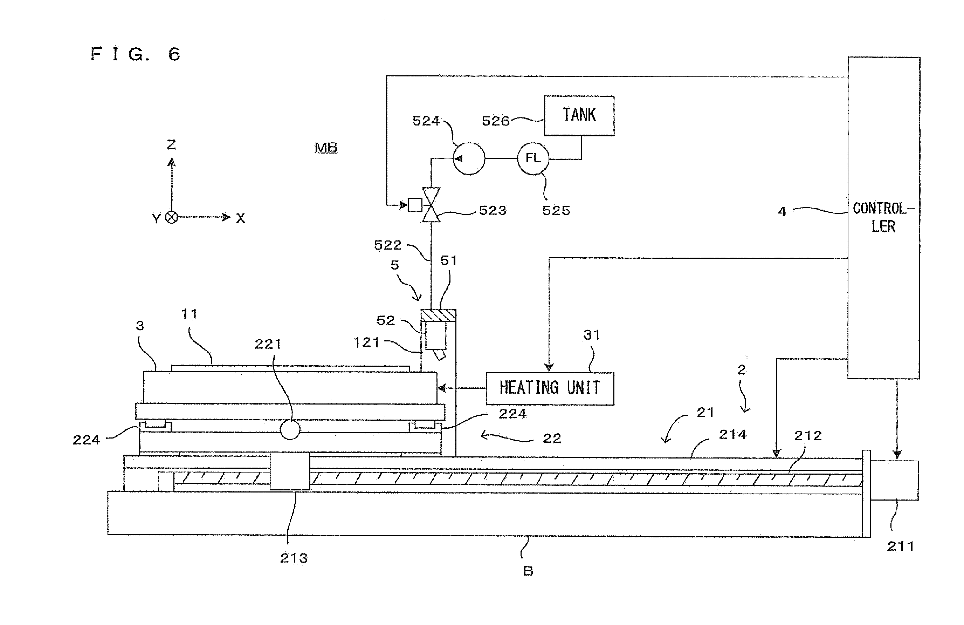

Although the photo-curable binder resin 15 is used as an example of the "binder" of the invention in the above first embodiment, a thermosetting binder resin may be used. A second embodiment of the catalyst structure according to the invention is described below with reference to FIG. 6.

FIG. 6 is a view showing an example of a catalyst structure manufacturing apparatus suitable for manufacturing the second embodiment of the catalyst structure according to the invention. This catalyst structure manufacturing apparatus MB largely differs from the manufacturing apparatus MA in that a heating part to heat a stage 3 is provided instead of the light irradiation part 53. This heating part includes a heater (not shown in the figure) provided on the stage 3 and a heating unit 31 to control the temperature of the stage 3 by operating the heater in response to a heating command from a controller 4. Note that since the other components are the same as in the manufacturing apparatus MA used in the first embodiment, they are denoted by the same reference signs and not described.

In the second embodiment, the catalyst structure is manufactured in the following manner. First, supported catalysts 14, a thermosetting binder resin and a liquid component such as water or an organic solvent are mixed to prepare a paste-like fluid material 10. Then, this fluid material 10 is stored in a tank 526 in advance. When a base material 11 before a catalyst layer is formed is placed on the stage 3 of the manufacturing apparatus MB, the heating of the stage 3 by the heating unit 31 is started. Note that a heating start timing of the stage 3 is not limited to this and, for example, the heating of the stage 3 may be started by operating the heating unit 31 before the base material 11 is carried into the manufacturing apparatus MB.

The base material 11 is moved to a predetermined application start position (position of the base material 11 in FIG. 6) so that the right end of the base material 11 is located at a position right below and near a head part 5 by operating a stage moving mechanism 2 with the base material 11 heated by the heated stage 3. Subsequently, the discharge of the fluid material from a discharge nozzle part 52 provided in the head part 5 is started while the base material 11 is moved in the X direction. This causes the fluid material 10 to be discharged from tip nozzles 521, whereby the fluid material 10 is applied into a plurality of rods parallel to each other on the base material 11 and rod shaped catalyst parts 13 extend in the X direction. Further, the rod shaped catalyst parts 13 applied to an upper surface 111 of the base material 11 are immediately heated, thereby being cured to maintain a convex shape in the YZ plane. Further, as in the first embodiment, the supported catalysts 14 are bound to each other by the binder resin 15 and a part of the liquid component evaporates during the discharge of the fluid material to form many voids 16 inside the catalyst parts 13. A step of evaporating a part of the liquid component by the heater in this way corresponds to an example of the "evaporation step" of the invention.

When the application of the fluid material 10 from one end to the other end of the base material 11 (application step) is finished, a return to the application start position is made and the above operation is repeatedly performed a necessary number of times until the formation of the catalyst parts 13 on the entire surface of the base material 11 is finished as in the first embodiment. At this time, the rod shaped catalyst parts 13 can be formed on the entire upper surface 111 of the base material 11 by moving the position of the base material 11 a predetermined distance in the Y direction every time one operation is finished. When the catalyst structure is manufactured in this way, the catalyst structure is carried out of the manufacturing apparatus MB and accommodated, for example, in a reaction container of a reforming apparatus.

As described above, also in the second embodiment, a catalyst structure having an excellent catalyst function is obtained from the same reason as in the first embodiment.

### <Third Embodiment>

Although the binder resin is used as the binder to bind the plurality of supported catalysts 14 to each other in the above first and second embodiments, fine particles finer than the catalyst supports may be used. More specifically, fine particles of silica (SiO₂), alumina (Al₂O₃), titanium oxide (TiO₂) or the like can be used. In this case, a catalyst structure can be manufactured using the manufacturing apparatus MB shown in FIG. 6 as in the second embodiment. A method for manufacturing a catalyst structure using fine particles (hereinafter, referred to as "binder fine particles") in the following procedure is described.

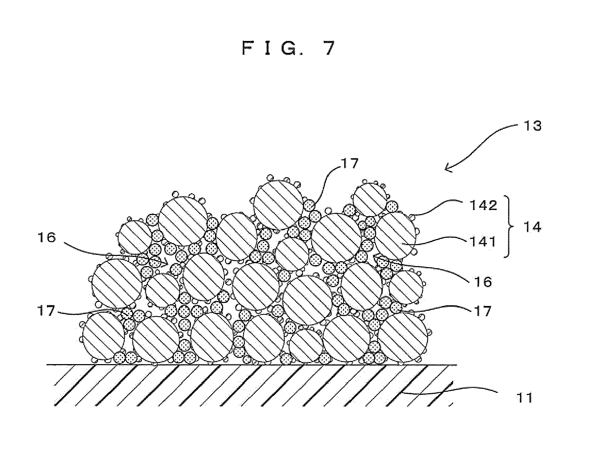

In this third embodiment, a paste-like fluid material 10 is prepared by mixing supported catalysts 14, binder fine particles, a liquid component such as water or an organic solvent. Then, this fluid material 10 is stored in a tank 526 in advance. When a base material 11 before a catalyst layer is formed is placed on the stage 3 of the manufacturing apparatus MB, the stage 3 is heated by the heating unit 31, the base material 11 is moved to the application start position and the fluid material is discharged from the discharge nozzle part 52 while the base material 11 is relatively moved with respect to the head part 5 as in the second embodiment. This causes the fluid material 10 to be applied into a plurality of rods parallel to each other on an upper surface 111 of the base material 11 and rod shaped catalyst parts 13 extend in the X direction. Further, inside the catalyst part 13, the binder fine particles 17 enter between the supported catalysts 14 to bind the supported catalysts 14 to each other and many voids 16 are formed by the evaporation of a part of the liquid component as shown in FIG. 7.

When the application of the fluid material 10 from one end to the other end of the base material 11 is finished, a return to the application start position is made and the above operation is repeatedly performed a necessary number of times until the formation of the catalyst parts 13 on the entire surface of the base material 11 is finished as in the first and second embodiments. In this way, the rod shaped catalyst parts 13 can be formed on the entire upper surface 111 of the base material 11. When the catalyst structure is manufactured in this way, the catalyst structure is carried out of the manufacturing apparatus MB and accommodated, for example, in a reaction container of a reforming apparatus.

As described above, also in the third embodiment, a catalyst structure having an excellent catalyst function is obtained from the same reason as in the first and second embodiments.

### <Fourth Embodiment>

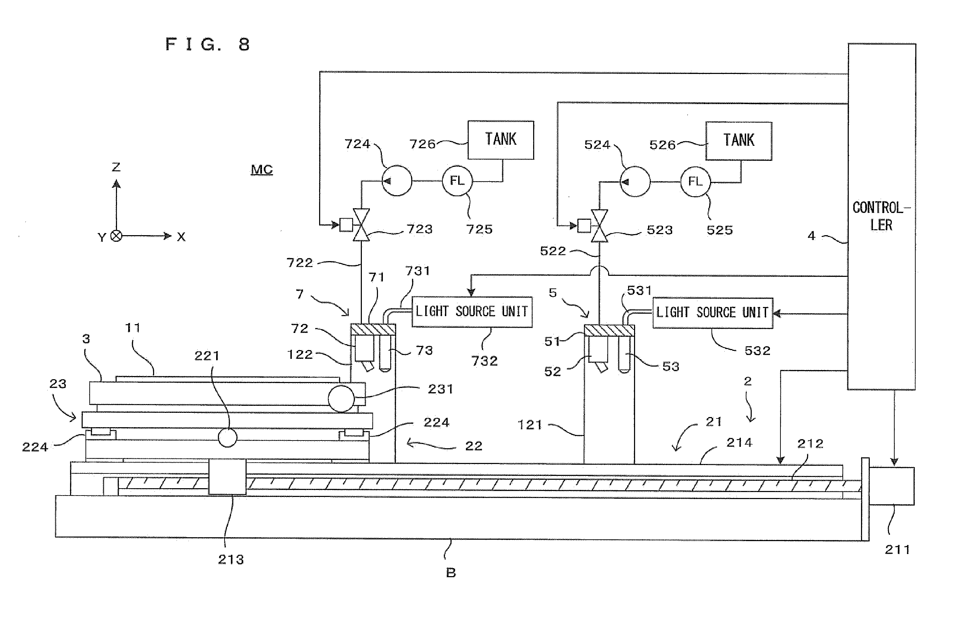

The catalyst structures 1 A according to the above first to third embodiments has a so-called line-and-space structure in which the plurality of catalyst parts 13 are formed in parallel on the base material 11 while being separated from each other in a regular interval in the Y direction. Thus, the upper surface 111 of the base material 11 is exposed between the catalyst parts 13 adjacent to each other, and no catalyst reaction occurs in these exposed parts. Contrary to this, a catalyst part having a planar shape (hereinafter, referred to as a "planar catalyst part") may be formed on the upper surface 111 of the base material 11 and a plurality of rod shaped catalyst parts 13 may be formed on the upper surface of this planar catalyst part as described next. In this case, the specific surface area can be further increased. A fourth embodiment of the invention is described below with reference to FIGS. 8 to 11.

FIG. 8 is a view showing an example of a catalyst structure manufacturing apparatus suitable for manufacturing the fourth embodiment of the catalyst structure according to the invention. This catalyst structure manufacturing apparatus MC largely differs from the manufacturing apparatus MA in that another head part 7 (hereinafter, referred to as a "second head part 7") to form a planar catalyst part is provided besides a head part 5 (hereinafter, referred to as a "first head part 5") to form rod shaped catalyst parts. Note that the other components are basically the same as in the manufacturing apparatus MA. Accordingly, the following description is centered on points of difference and the same components are denoted by the same reference signs and not described.

In this manufacturing apparatus MC, a frame 122 different from a frame 121 is so fixed to a base B as to straddle a stage 3 in order to provide the second head part 7. The second head part 7 is attached to the frame 122. Note that the second head part 7 is arranged at a distance from the first head part 5 in a (-X) direction to form the planar catalyst part by the second head part 7 before the rod shaped catalyst parts are formed by the first head part 5.

This second head part 7 includes a base 71, a discharge nozzle part 72 and a light irradiation part 73 similarly to the first head part 5. Further, a tank 726 to store a fluid material containing supported catalysts is connected to the discharge nozzle part 72 via a supply pipe 722, a control valve 723, a pump 724 and a flowmeter 725. The controller 4 controls the opening and closing of the control valve 723, whereby the discharge of the fluid material from the discharge nozzle part 72 is controlled to be on and off.

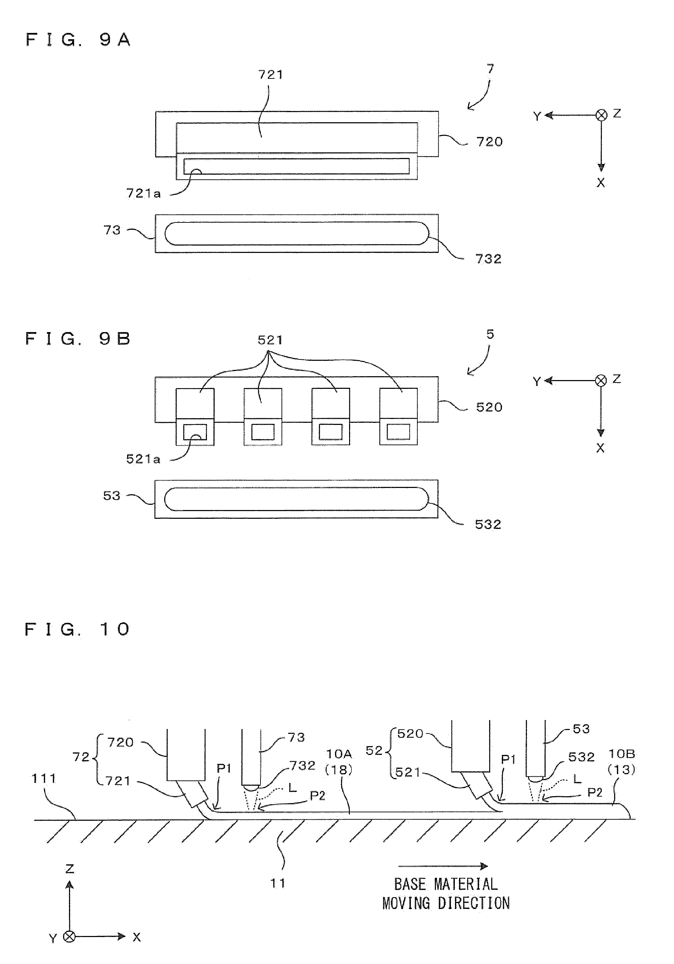

FIGS. 9A and 9B are enlarged views showing the configurations of the head parts in more detail. More specifically, FIG. 9A is a view showing the vicinity of the tip of the discharge nozzle part 72 when the second head part 7 is viewed from below and FIG. 9B is a view showing the vicinity of the tip of a discharge nozzle part 52 when the first head part 5 is viewed from below. As can be understood from these figures, the second head part 7 also includes a nozzle base 720 and a tip nozzle 721 similarly to the first head part 5, but differs from the first head part 5 in the following points. Specifically, the second head part 7 includes one discharge port 721a provided in the tip nozzle 721. A width of the discharge port 721 a in the Y direction is larger than that of each discharge port 521a and, more specifically, slightly longer than a distance from a (+Y) direction end of the discharge port 521a on a farthest (+Y) direction side to a (-Y) direction end of the discharge port 521a on a farthest (-Y) direction side. Thus, the rod shaped catalyst parts can be formed of the fluid material discharged from each discharge port 521 a on the upper surface of the planar catalyst part formed of the fluid material discharged from the discharge port 721 a as described later. Note that denoted by sign 732 in FIG. 9A is a lens to irradiate light to the entire fluid material discharged from the discharge port 721a.

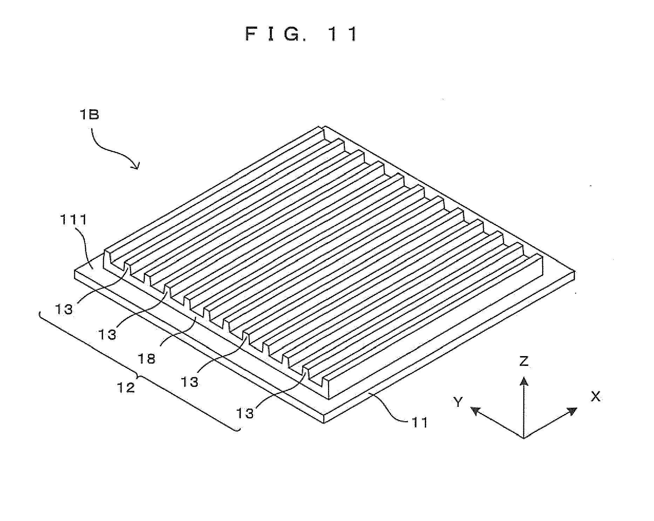

In the fourth embodiment, a catalyst structure 1B shown in FIG. 11 is manufactured using the manufacturing apparatus MC configured as described above. First, as in the first embodiment, a paste-like fluid material 10 is prepared by mixing supported catalysts 14, a photo-curable binder resin and a liquid component such as water or an organic solvent in advance and this fluid material 10 is stored in the tanks 526, 726. The fluid materials 10 stored in the respective tanks 526, 726 have the same composition, but are respectively referred to as a "fluid material 10B" and a "fluid material 10A" for convenience of the description of an operation to be given later.

When a base material 11 before a catalyst layer is formed is placed on the stage 3 of the manufacturing apparatus MC, a stage moving mechanism 2 is operated to move the base material 11 to a predetermined application start position (position of the base material 11 in FIG. 8) so that the right end of the base material 11 is located at a position right below and near the head part 7. Subsequently, the discharge of the fluid material and light irradiation from the discharge nozzle part 72 and the light irradiation part 73 provided in the head part 7 located on an upstream side in a base material moving direction X out of the two head parts are respectively started while the base material 11 is moved in the X direction. Note that, in this stage, the discharge of the fluid material and light irradiation from the discharge nozzle part 52 and a light irradiation part 53 provided in the head part 5 are both stopped.

By discharging the fluid material 10A from the tip nozzle 721, the fluid material 10 is applied wide in the Y direction on the base material 11, thereby planar catalyst part 18 is formed (refer to FIGS. 10 and 11). Further, by irradiating ultraviolet rays from the light irradiation part 73 provided downstream of the discharge nozzle part 72 in the base material moving direction X, the catalyst part 18 is cured and the planar shape is maintained. Then, by moving the base material 11 in the X direction while the discharge of the fluid material by the discharge nozzle part 72 and light irradiation from the light irradiation part 73 are continued, the planar catalyst part 18 extends in the X direction and, consequently, a (+X) direction side end part of the planar catalyst part 18 moves to a position right below the head part 5. Then, the formation of the rod shaped catalyst parts 13 by the head part 5 is started and a plurality of rod shaped catalyst parts 13 are formed on the planar catalyst part 18 while being separated in the Y direction as shown in FIG. 10. Note that the rod shaped catalyst parts 13 are formed in the same manner as in the first embodiment. In this way, a catalyst layer 12 having a toothed belt shape is formed on the base material 11 as shown in FIG. 11 and, inside the catalyst layer 12, the supported catalysts 14 are bound to each other by the binder resin 15 and many voids 16 are formed by the evaporation of a part of the liquid component during the discharge of the fluid material and light irradiation as in the first embodiment (refer to FIG. 4B).

When the formation of the planar catalyst part 18 from one end to the other end of the base material 11 is completed, the application of the fluid material 10A and light irradiation are finished. When the formation of the rod shaped catalyst parts 13 from the one end to the other end of the base material 11 is subsequently completed, the application of the fluid material 10B and light irradiation are finished. A return to the application start position is made and the above operation is repeatedly performed a necessary number of times until such formation of the catalyst parts 18, 13 on the entire surface of the base material 11 is finished. At this time, the position of the base material 11 is moved a predetermined distance in the Y direction every time one operation is finished. In this way, the catalyst layer 12 formed by laminating the planar catalyst part 18 and the plurality of rod shaped catalyst parts 13 on the entire upper surface 111 of the base material 11 is formed on the upper surface of the base material 11 to manufacture the catalyst structure 1B. Thereafter, the catalyst structure 1B is carried out of the manufacturing apparatus MC and accommodated in a reaction container of a reforming apparatus.

As described above, in the fourth embodiment, not only a catalyst structure having an excellent catalyst function is obtained from the same reason as in the first to third embodiments, but also the planar catalyst part 18 is exposed between the rod shaped catalyst parts 13 adjacent to each other. Thus, the specific surface area can be more improved than in the first to third embodiments.

### <Fifth Embodiment>

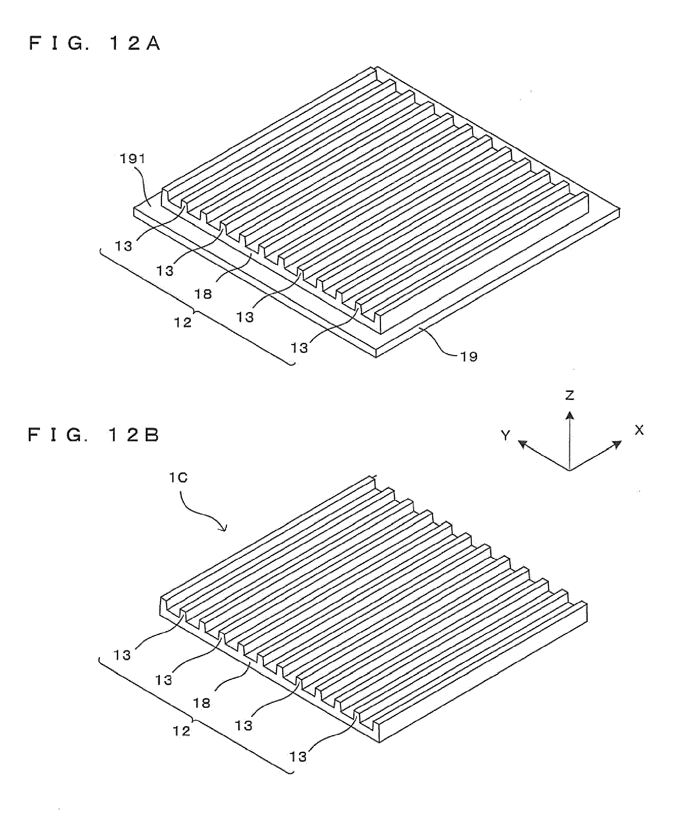

In the fourth embodiment, the catalyst layer 12 is formed by forming the rod shaped catalyst parts 13 on the upper surface of the planar catalyst part 18 formed on the upper surface 111 of the base material 11 and the planar catalyst part 18 and the rod shaped catalyst parts 13 are integrated in the catalyst layer 12. As shown in FIGS. 12A and 12B, after a catalyst layer 12 including a planar catalyst part 18 and rod shaped catalyst parts 13 is formed on a flat surface 191 of a manufacturing jig 19, this catalyst layer 12 may be separated from the manufacturing jig 19 (separation step) and this separated body (= catalyst layer 12) may be good as a catalyst structure 1C. In this case, the peelability of the catalyst layer 12 from the flat surface 191 of the manufacturing jig 19 is desirably better than that from the upper surface 111 of the base material 11, e.g. the flat surface 191 is desirably made of a material having a smaller surface tension than a surface tension of the upper surface 111. Note that, in the fifth embodiment, the planar catalyst part 18 formed on the flat surface 191 of the manufacturing jig 19 corresponds to an example of a "planar part" of the invention.

### <Miscellaneous>

As described above, the binder resin 15 or the binder fine particles 17 are used as the "binder" of the invention in each of the above embodiments, but specific examples of usable "binder" include "polyvinylidene difluoride (PVDF: PolyVinylidene DiFluoride), styrene-butadinene rubber (SBR: Styrene-Butadinene Rubber), carboxymethyl cellulose (CMC: CarboxyMethyl Cellulose), nano-silica, nano-alumina, and nano-titanium oxide. Further, the rod shaped catalyst parts 13 and the planar catalyst part 18 respectively correspond to an example of "first shape catalyst parts" and an example of a "second shape catalyst part" of the invention.

Further, in the above embodiments, a step of preparing the fluid material (Step S 1, etc.) corresponds to an example of a "preparation step" of the invention, and a step of forming the catalyst part(s) by the discharge of the fluid material from the head part(s) 5, 7 corresponds to an example of a "catalyst layer formation step" of the invention.

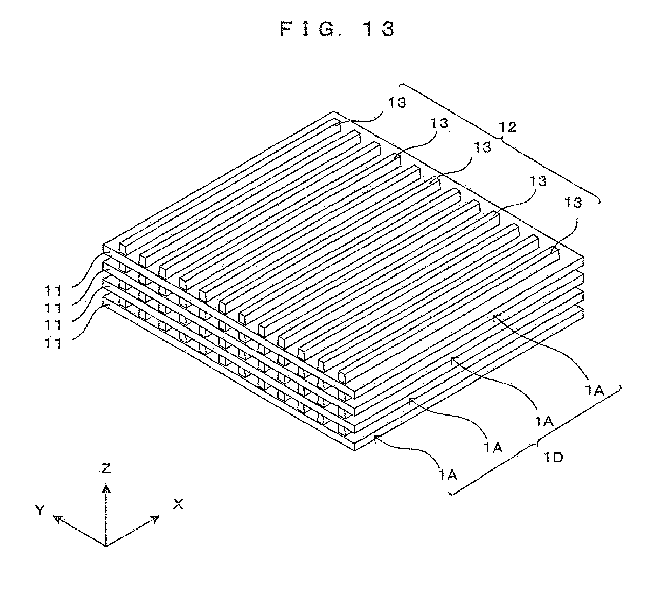

Note that the invention is not limited to the aforementioned embodiments and various changes other than the aforementioned ones can be made without departing from the gist of the invention. For example, a plurality of catalyst structures (= base materials 11 + catalyst layers 12) according to the above first to fourth embodiments may be combined. For example, an assembly obtained by laminating a plurality of catalyst structures 1A as shown in FIG. 13 may be used as a catalyst structure 1D. On this point, the same applies also when the catalyst structure 1A, 1B are combined, when a plurality of catalyst structures 1C (= catalyst layers 12) according to the fifth embodiment are combined or when the catalyst structure 1C is combined with the catalyst structure 1A(1B).

Further, in the above embodiments, the rod shaped catalyst part 13 having a cross-sectional shape with a width of 70 [µm] in the Y direction and a height of 150 [µm] in the Z direction is formed as the "first shape catalyst part" of the invention. However, the rod shaped catalyst part 13 has only to have a self-standing three-dimensional shape. Examples of the "first shape catalyst part" of the invention include a catalyst part 13 having a rectangular parallelepipedic shape with a width of 30 to 300 [µm] in the Y direction and a height in the Z direction, which is 0.2 to 3 folds of the width in the Y direction, an island shaped catalyst part 13 and the like.

Further, although the plurality of rod shaped catalyst parts 13 are provided in stripes in a plan view as shown in FIGS. 4A, 4B, 11, 12A and 12B in the above embodiments, an arrangement mode of the plurality of rod shaped catalyst parts 13 is arbitrary without being limited to this. For example, the catalyst parts 13 may be in a lattice arrangement in a plan view.

Although the shapes of the catalyst parts 13, 18 are maintained utilizing the photo-curable property or thermosetting property of the binder in the above embodiments, the shape may be maintained by preparing the fluid material 10 having a relatively high viscosity or controlling the viscosity of the catalyst parts immediately after application using a quick-drying solvent such as acetone or alcohols as the liquid component.

Further, although the catalyst layer 12 is formed only on the one principal surface 111 of the base material 11 in the above first to fourth embodiments, a catalyst layer may be formed on the other principal surface of the base material 11, too.

Furthermore, although the invention is applied to the catalyst structure that functions as a reforming catalyst to produce reformed gas in the above embodiments, an application target of the invention is not limited to this and the invention can be applied to catalysts in general used in the chemical industry.

Although the invention has been described with reference to specific embodiments, this description is not meant to be construed in a limiting sense. Various modifications of the disclosed embodiment, as well as other embodiments of the invention, will become apparent to persons skilled in the art upon reference to the description of the invention. It is therefore contemplated that the appended claims will cover any such modifications or embodiments as fall within the true scope of the invention.

## Claims

1. A catalyst structure, comprising a catalyst layer in which a plurality of supported catalysts each including a particulate catalyst support and catalyst particles having a smaller diameter than the catalyst support and supported in a dispersed manner on a surface of the catalyst support are bound by a binder.

2. The catalyst structure according to claim 1, further comprising a base material,
wherein the catalyst layer is formed on the base material.

3. The catalyst structure according to claim 2, wherein:
the catalyst layer includes a plurality of first shape catalyst parts formed to have a rod shape or island shape; and
the plurality of first shape catalyst parts are arranged at a distance from each other so that one principal surface of the base material is partially exposed.

4. The catalyst structure according to claim 2, wherein:
the catalyst layer includes a first shape catalyst part formed to have a rod shape or island shape and a second shape catalyst part formed to have a planar shape; and
the second shape catalyst part is formed on one principal surface of the base material and the first shape catalyst part is formed on the second shape catalyst part.

5. The catalyst structure according to claim 1, wherein:
the catalyst layer includes a first shape catalyst part formed to have a rod shape or island shape and a second shape catalyst part formed to have a planar shape; and
the first shape catalyst part is formed on the second shape catalyst part.

6. The catalyst structure according to any one of claims 1 through 5, wherein:
a plurality of voids are formed in the catalyst layer.

7. The catalyst structure according to claim 1, wherein:
the catalyst layer is formed using a fluid material prepared by mixing the plurality of supported catalysts, the binder and a liquid containing water or a solvent.

8. The catalyst structure according to claim 7, further comprising a base material,
wherein the catalyst layer is formed by applying the fluid material to the base material.

9. The catalyst structure according to claim 8, wherein:
the catalyst layer is formed by applying the fluid material into rod shape or island shape to one principal surface of the base material.

10. The catalyst structure according to claim 8, wherein:
the catalyst layer is formed by applying the fluid material in a planar manner to one principal surface of the base material to form a planar catalyst part and applying the fluid material into rod shape or island shape to the planar catalyst part.

11. The catalyst structure according to claim 7, wherein:
the catalyst layer is formed by applying the fluid material in a planar manner to a flat surface of a manufacturing jig to form a planar catalyst part, applying the fluid material into rod shape or island shape to the planar catalyst part and separated from the manufacturing jig.

12. The catalyst structure according to any one of claims 7 through 11, wherein:
the catalyst layer includes voids formed by evaporating the liquid.

13. A catalyst structure manufacturing method to manufacture a catalyst structure including a catalyst layer, comprising:
a preparation step of preparing a fluid material by mixing supported catalyst including a particulate catalyst support and catalyst particles having a smaller diameter than the catalyst support and supported in a dispersed manner on a surface of the catalyst support, a binder and a liquid containing water or a solvent; and
a catalyst layer formation step of forming the catalyst layer by the fluid material.

14. The catalyst structure manufacturing method according to claim 13, wherein:
the catalyst structure further includes a base material to support the catalyst layer; and
the catalyst layer formation step includes an application step of forming the catalyst layer by applying the fluid material onto the base material.

15. The catalyst structure manufacturing method according to claim 13, wherein:
the catalyst layer formation step includes an application step of forming the catalyst layer by applying the fluid material in a planar manner to a flat surface of a manufacturing jig to form a planar part and applying the fluid material into rod shape or island shape to the planar part and a separation step of separating the catalyst layer from the manufacturing jig after the application step.

16. The catalyst structure manufacturing method according to claim 14 or 15, wherein:
the catalyst layer formation step further includes an evaporation step of providing voids in the catalyst layer by evaporating the liquid after the application step.

17. A catalyst structure manufacturing apparatus to manufacture a catalyst structure including a catalyst layer, comprising:
a discharge nozzle part to discharge a fluid material that is includes a supported catalyst including a particulate catalyst support and catalyst particles having a smaller diameter than the catalyst support and supported in a dispersed manner on a surface of the catalyst support, a binder, a liquid containing water or a solvent; and
a moving mechanism to relatively move a base material or a manufacturing jig with respect to the discharge nozzle part;
wherein the fluid material is discharged from the discharge nozzle part toward a principal surface of the base material or a flat surface of the manufacturing jig while the base material or the manufacturing jig is relatively moved with respect to the discharge nozzle part by the moving mechanism so that the fluid material is applied onto the principal surface of the base material or the flat surface of the manufacturing jig.
